# EUROPÄISCHE PATENTANMELDUNG

(11) **EP 1 270 978 A2**
(43) Veröffentlichungstag der Anmeldung: **02.01.2003**
(21) Anmeldenummer: 02009300.1
(22) Anmeldetag: 30.04.2002
(51) Int. Cl.: F16D 48/06

(54) **Verfahren zum Ansteuern einer regelbaren Ventilanordnung, insbesondere einer zur Kupplungsbetätigung eingesetzten Ventilanordnung**

(30) Priorität: 30.06.2001 DE 10131767
(71) Anmelder: ZF Sachs AG, 97424 Schweinfurt (DE)
(72) Erfinder: John, Thomas, Dipl.-Ing., 97529 Sulzheim (DE); Schneider, Hans-Jürgen, Dipl.-Ing., 97440 Werneck-Stettbach (DE)

(57) **Zusammenfassung**

Bei einem Verfahren zum Ansteuern einer regelbaren Ventilanordnung (76) insbesondere einer zur Kupplungsbetätigung eingesetzten Ventilanordnung (76), wobei die Ventilanordnung (76) ein zur Veränderung des Stellzustan des der Ventilanordnung (76) bewegbares Ventilorgan aufweist, wird die Ventilanordnung (76) derart angesteuert, dass einem Grund-Bewegungs zustand des Ventilorgans eine Oszillationsbewegung (D) überlagert wird wobei die Größe (ΔI) der Oszillationsbewegung in Abhängigkeit vor wenigstens einem Betriebsparameter eingestellt wird.

## Beschreibung

Die vorliegende Erfindung betrifft ein Verfahren zum Ansteuern einer regelbaren Ventilanordnung, insbesondere einer zur Kupplungsbetätigung eingesetzten Ventilanordnung, wobei die Ventilanordnung ein zur Veränderung des Stellzustandes der Ventilanordnung bewegbares Ventilorgan aufweist.

Bei Einsatz derartiger Ventilanordnungen, welche beispielsweise einen drehbaren oder im Wesentlichen linear verlagerbaren Ventilschieber aufweisen, besteht grundsätzlich das Problem, dass zum im Wesentlichen dichten Abschluss der Ventilanordnung das bewegbare Ventilorgan mit enger Passung in einen dieses aufnehmenden Ventilkörper eingesetzt werden muss. Die enge Passung hat vergleichsweise starke Reibungen zur Folge. Insbesondere besteht das Problem, dass bei Aktivierung der Ventilanordnung nach einer längeren Ruhephase das bewegbare Ventilorgan verstärkt an dem dieses aufnehmenden Ventilkörper anhaftet und somit zunächst vergleichsweise viel Energie aufgebracht werden muss, um das Ventilorgan in Bewegung zu setzen. Neben dem Nachteil der dadurch eingeführten zeitlichen Verzögerung besteht grundsätzlich auch das Problem, dass auf diese Art und Weise Überschwinger erzeugt werden, was sich vor allem bei feinfühliger Regulierung der Ventilstellung bzw. der Stellung eines durch Ansteuerung der Ventilanordnung zu betätigenden Organs sehr nachteilhaft auswirkt.

Um diesem Problem entgegenzuwirken, kann derart vorgegangen werden, dass verhindert wird, dass das bewegbare Ventilorgan in längere Ruhephasen gelangt. Beispielsweise ist es möglich, durch entsprechende Ansteuerung der Ventilanordnung dem Grund-Bewegungszustand des Ventilorgans, also entweder einem Stillstand oder einer Verstellbewegung, eine oszillierende Bewegung zu überlagern. Diese oszillierende Bewegung muss natürlich von ihrem Ausmaß her derart bemessen sein, dass sie keine Änderung der Ventilcharakteristik zur Folge hat. D.h., es darf beispielsweise der mittlere Fluidstrom, welcher durch die Ventilanordnung hindurchströmen soll, nicht beeinträchtigt sein.

Es ist die Aufgabe der vorliegenden Erfindung, ein Verfahren zur Ansteuerung einer regelbaren Ventilanordnung, insbesondere bei einer zur Kupplungsbetätigung eingesetzten Ventilanordnung, vorzusehen, mit welchem eine verbesserte Betriebscharakteristik einer derartigen Ventilanordnung erlangt werden kann.

Gemäß der vorliegenden Erfindung wird diese Aufgabe gelöst durch ein Verfahren zum Ansteuern einer regelbaren Ventilanordnung, insbesondere einer zur Kupplungsbetätigung eingesetzten Ventilanordnung, wobei die Ventilanordnung ein zur Veränderung des Stellzustandes der Ventilanordnung bewegbares Ventilorgan aufweist, bei welchem Verfahren die Ventilanordnung derart angesteuert wird, dass einem Grund-Bewegungszustand des Ventilorgans eine Oszillationsbewegung überlagert wird, wobei die Größe der Oszillationsbewegung in Abhängigkeit von wenigstens einem Betriebsparameter eingestellt wird.

Auch die vorliegende Erfindung nutzt zunächst das Prinzip, dem Grund-Bewegungszustand des bewegbaren Ventilorgans eine Oszillationsbewegung zu überlagern und somit durch eine ständige "Zitterbewegung" des Ventilorgans ein Anhaften desselben bzw. ein Übergehen in einen länger andauernden Haftreibungszustand zu vermeiden. Die Erfindung geht jedoch noch den zusätzlichen Schritt, die Größe dieser Oszillationsbewegung nicht als fixen Wert vorzugeben, sondern ihn betriebszustandsabhängig zu ändern. Es ist erkannt worden, dass die grundsätzlich immer vorhandene Gefahr des Anhaftens oder einer schwergängigen Bewegung des bewegbaren Ventilorgans durch Einführen dieser Oszillationsbewegung nicht vollständig ausgeschaltet werden kann. Beispielsweise hat der Einsatz viskoser Schmiermedien zur Folge, dass bei niedrigen Temperaturen diese zäher werden und somit auch das bewegbare Ventilorgan schwerer bewegbar wird. Gemäß der vorliegenden Erfindung kann diesem Problem jedoch durch Vergrößern der Oszillationsbewegung, d.h. Erhöhen der Oszillationsamplitude, entgegengewirkt werden.

Wie bereits angesprochen, kann der wenigstens eine Betriebsparameter die Temperatur im Bereich der Ventilanordnung umfassen. Dies kann sowohl die Temperatur der Umgebungsluft sein, als auch die Temperatur verschiedener Baugruppen der Ventilanordnung selbst.

Beispielsweise kann vorgesehen sein, dass mit abnehmender Temperatur ausgehend von einer ersten Referenztemperatur die Größe der Oszillationsbewegung vergrößert wird. Weiter ist es möglich, dass mit zunehmender Temperatur ausgehend von einer zweiten Referenztemperatur die Größe der Oszillationsbewegung vergrößert wird. Es ist erkannt worden, dass nicht nur niedrige Temperaturen die angesprochenen Probleme in der Gängigkeit des bewegbaren Ventilorgans nach sich ziehen, sondern auch höhere Temperaturen. Dies kann beispielsweise dadurch bedingt sein, dass ein zur Schmierung an sich vorzusehender Schmiermittelfilm bei höheren Temperaturen reißt oder dass durch Bauteileausdehnungen die ohnehin schon sehr enge Passung zwischen dem Ventilorgan und dem dieses aufnehmenden Ventilkörper noch kleiner und somit das Ventilorgan noch schwergängiger wird. Dabei ist vorzugsweise vorgesehen, dass die erste Referenztemperatur kleiner ist als die zweite Referenztemperatur. Weiter kann vorgesehen sein, dass zwischen der ersten Referenztemperatur und der zweiten Referenztemperatur die Größe der Oszillationsbewegung im Wesentlichen keine temperaturbedingte Änderung erfährt.

Um unter Einsatz einer Konstantspannungsquelle eine Ventilanordnung in verschiedene Stellungen bringen zu können, wird vorgeschlagen, dass der Ventilanordnung ein impulsbreitenmoduliertes Ansteuersignal zugeführt wird, wobei eine Grund-Impulsbreite beruhend auf der vorzusehenden Ventilstellung eingestellt wird, und dass zum Erhalt der Oszillationsbewegung die Grund-Impulsbreite vorzugsweise periodisch variiert wird. Um dabei dann die erfindunsgemäße betriebszustandsabhängige Anpassung der Größe der Oszillationsbewegung erlangen zu können, wird vorgeschlagen, dass die Größe der Variation der Grund-Impulsbreite in Abhängigkeit von dem wenigstens einen Betriebsparameter eingestellt wird.

Ein weiteres Problem bei derartigen Ventilanordnungen ist, dass im Neuzustand auf Grund der Fertigungstoleranzen nicht alle Ventilanordnungen in gleicher Art und Weise auf Ansteuerbefehle reagieren und nicht alle Ventilanordnungen, auch wenn sie gleicher Bauart sind, hinsichtlich der Bewegungscharakteristik des Ventilorgans einander entsprechen.

Um diesem Problem entgegenzutreten, ist gemäß einem weiteren Aspekt der vorliegenden Erfindung ein Verfahren zur Ansteuerungsoptimierung bei einer regelbaren Ventilanordnung vorgesehen, insbesondere bei einer zur Kupplungsbetätigung eingesetzten Ventilanordnung, wobei im Betrieb durch Ansteuern der Ventilanordnung ein zu verstellendes Organ verstellbar oder/und in einer vorgegebenen Stellung haltbar ist und die Ventilanordnung derart angesteuert wird, dass einem Grund-Bewegungszustand eines zur Veränderung des Stellzustandes der Ventilanordnung bewegbaren Ventilorgans eine Oszillationsbewegung überlagert ist, wobei das Verfahren die Schritte umfasst: bei vorgegebener Grund-Größe der Oszillationsbewegung beziehungsweise einer diese bestimmenden Ansteuergröße, Vorgeben einer im Wesentlichen periodischen Soll-Bewegung für das zur verstellende Organ, Vergleichen der vorgegebenen Soll-Bewegung mit einer erfassten Ist-Bewegung des zu verstellenden Organes, dann, wenn zwischen der Soll-Bewegung und der Ist-Bewegung eine ein vorbestimmtes Ausmaß übersteigende Abweichung erfasst wird, Erhöhen der Größe der Oszillationsbewegung beziehungsweise der diese bestimmenden Ansteuergröße.

Gemäß diesem Aspekt der vorliegenden Erfindung wird also unter Ausnutzung der vorangehend angesprochenen Erfindungsprinzipien, nämlich der Anpassbarkeit der Größe der Oszillationsbewegung, für jede Ventilanordnung, die beispielsweise in einem Kraftfahrzeug zur Kupplungsbetätigung in Betrieb gesetzt werden soll, die Größe der Oszillationsbewegung optimiert. Diese Optimierung kann bei einer bestimmten Referenztemperatur stattfinden, kann beispielsweise bei der Fertigung oder nach der Fertigung der Ventilanordnung an sich oder auch beispielsweise nach dem Einbau in ein Kraftfahrzeug vorgenommen werden. Für jede Ventilanordnung wird dann eine spezielle zugeordnete Größe der Oszillationsbewegung ermittelt und in der zugeordenten Ansteuervorrichtung abgespeichert. Diese Größe bildet dann den Ausgangswert für die im Betrieb vorzunehmende Ansteuerung und kann selbstverständlich gemäß den vorangehenden Erfindungsprinzipien dann betriebszustandsabhängig verändert werden.

Beispielsweise kann bei dieser Vorgehensweise vorgesehen sein dass die Größe der Oszillationsbewegung beziehungsweise der diese bestimmenden Ansteuergröße schrittweise erhöht wird, bis die Abweichung unter dem vorbestimmten Ausmaß liegt.

Die Abweichung zwischen der Soll-Bewegung und der Ist-Bewegung kann beispielsweise bestimmt werden durch:
- Ermitteln einer Ist-Lage des zu verstellenden Organs dann, wenn eine Soll-Lage ein Lageextremum aufweist, und Bilden einer Differenz zwischen der ermittelten Ist-Lage und der Soll-Lage oder/und
- Ermitteln einer Zeitdifferenz zwischen einem ersten Zeitpunkt, zu welchem die Soll-Lage ein Lageextremum aufweist, und einem zweiten Zeitpunkt, zu welchem die Ist-Lage nach dem ersten Zeitpunkt ein Lageextremum aufweist.

Auch bei dieser Vorgehensweise kann vorteilhafterweise wieder vorgesehen sein, dass der Ventilanordnung ein impulsbreitenmoduliertes Ansteuersignal zugeführt wird, wobei eine Grund-Impulsbreite beruhend auf der vorzusehenden Ventilstellung eingestellt wird, dass zum Erhalt der Oszillationsbewegung die Grund-Impulsbreite vorzugsweise periodisch variiert wird und dass im Schritt c) zum Erhöhen der Größe der Oszillationsbewegung die Variation der Grund-Impulsbreite erhöht wird.

Gemäß einem weiteren Aspekt der vorliegenden Erfindung kann vorgesehen sein, dass der Ventilanordnung ein impulsbreitenmoduliertes Ansteuersignal mit vorbestimmter Taktfrequenz zugeführt wird und dass zum Erhalt der Oszillationsbewegung eine Grund-Impulsbreite des impulsbreitenmodulierten Ansteuersignals mit einer Frequenz variiert wird, welche kleiner ist als die Taktfrequenz des Ansteuersignals.

Die Erfindung wird nachfolgend mit Bezug auf die beiliegenden Zeichnungen anhand bevorzugter Ausgestaltungsformen detailliert beschrieben. Es zeigt:
- Fig. 1: eine schematische Ansicht eines Antriebssystems, bei welchem die Prinzipien der vorliegenden Erfindung zum Einsatz kommen können;
- Fig. 2: schematisch den Aufbau einer Stellgliedanordnung für eine Kraftfahrzeugreibungskupplung;
- Fig. 3a: den Spannungsverlauf eines impulsbreitenmodulierten Ansteuersignals für eine Ventilanordnung;
- Fig. 3b: den periodischen Verlauf, welcher die Überlagerung einer Oszillationsbewegung vorgibt;
- Fig. 4: ein Diagramm, das die Abhängigkeit der Größe der zu überlagernden Oszillationsbewegung von der Temperatur zeigt;
- Fig. 5: ein Zeitdiagramm, das einen Soll-Bewegungsverlauf und einen Ist-Bewegungsverlauf einer Kraftfahrzeugreibungskupplung darstellt.

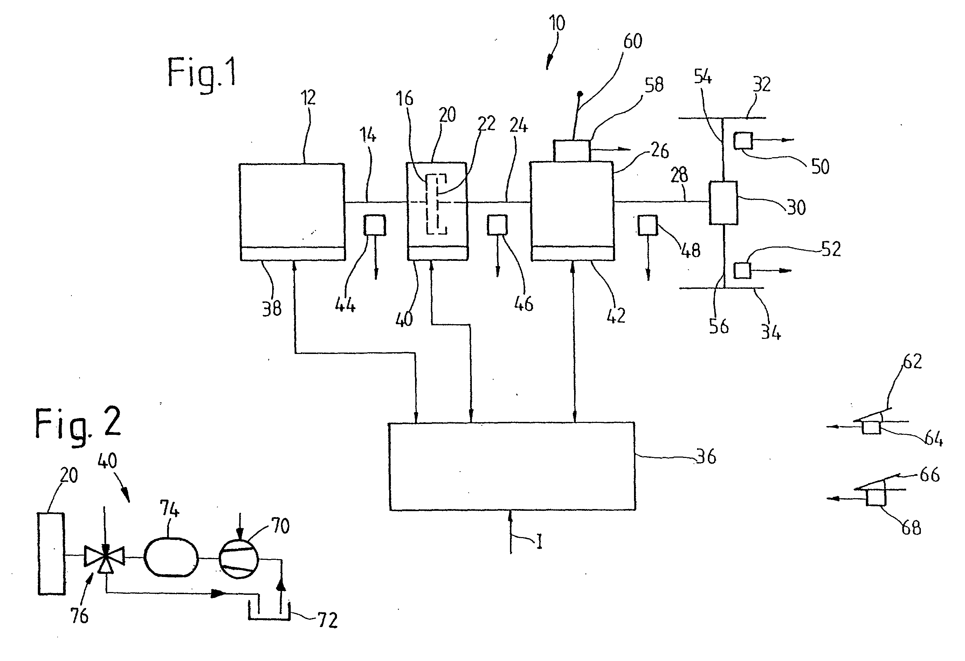

Zunächst wird mit Bezug auf die Figur 1 allgemein ein Antriebssystem beschrieben, bei welchem das erfindungsgemäße Konzept angewandt werden kann. Das Antriebssystem 10 umfasst ein Antriebsaggregat 12, beispielsweise eine Brennkraftmaschine 12, das über eine Antriebswelle 14 mit einer Eingangsseite 16 einer automatisierten Kupplungsanordnung 20, beispielsweise Reibungskupplung, in Verbindung steht. Eine Ausgangsseite 22 der Kupplungsanordnung 20 steht über eine Getriebeeingangswelle 24 in Antriebsverbindung mit einer automatisierten Getriebeanordnung 26. Deren Ausgangswelle 28 treibt über ein Differenzial 30 angetriebene Räder 32, 34 an. Das Antriebsaggregat 12, die Kupplungsanordnung 20 und die Getriebeanordnung 26 stehen unter der Ansteuerung einer Ansteuervorrichtung 36. Diese Ansteuervorrichtung 36 steht im Datentaustausch mit einer Leistungsstellanordnung 38 des Antriebsaggregats, um durch die Zuleitung von Ansteuersignalen oder Befehlen zur Leistungsstellanordnung 38 die Leistungsabgabe beziehungsweise die Drehzahl des Antriebsaggregats 12 zu steuern beziehungsweise zu regeln. Es sei darauf verwiesen, dass die Leistungsstellanordnung 38 jeglichen Bereich eines Antriebsaggregats umfasst, in welchem ein Einfluss auf dessen Drehzahl beziehungsweise Leistungsabgabe genommen werden kann, beispielsweise das Einspritzsystem, das Drosselsystem, das Zündsystem, das Nockensystem usw. Selbstverständlich liefert die Leistungsstellanordnung 38 Information an die Ansteuervorrichtung 36, welche den Leistungsstellzustand des Antriebsaggregats 12 bezeichnet.

Ferner steht die Ansteuervorrichtung 36 mit einer Stellgliedanordnung 40 der automatisierten Kupplungsanordnung 20 in Verbindung, um durch Zufuhr entsprechender Stellsignale zu dieser die Kupplungsanordnung 20 zwischen einer eingerückten und einer ausgerückten Kupplungsstellung zu verstellen. Auch die Stellgliedanordnung 40 kann zur Ansteuervorrichtung 36 Information liefern, welche den momentanen Stellzustand der Kupplungsanordnung bezeichnet.

Weiter liefert die Ansteuervorrichtung 36 Ansteuersignale zur einer Stellgliedanordnung 42 der Getriebeanordnung 26. Diese Ansteuersignale führen zur Durchführung von Schaltvorgängen innerhalb der Getriebeanordnung 26. Auch hier wird der Ansteuervorrichtung 36 wieder Information rückgeliefert, welche den momentanen Stellzustand der Getriebeanordnung 26 bezeichnet. Die Ansteuervorrichtung 36 erhält weiter Information I von verschiedenen Sensoren, beruhend auf welcher Information die Ansteuervorrichtung 36 den Gesamtbetriebszustand des Fahrzeugs ermitteln kann. So ist beispielsweise ein Drehzahlsensor 44 vorgesehen, welcher die Drehzahl der Antriebswelle 14 erfasst. Es sei darauf verwiesen, dass, sofern hier von der Erfassung der Drehzahl die Rede ist, dies selbstverständlich auch die Erfassung jeglicher die Drehzahl charakterisierender Information umfasst, die dann beispielsweise in der Ansteuervorrichtung 36 zur tatsächlichen Ermittlung der Drehzahl an sich verarbeitet wird. Ferner ist ein Drehzahlsensor 46 vorgesehen, welcher die Drehzahl der Getriebeeingangswelle 24 erfasst, sowie ein Drehzahlsensor 48, welcher die Drehzahl der Getriebeausgangswelle 28 erfasst. Weiter sind Drehzahlsensoren 50, 52 vorgesehen, welche die Drehzahl der angetriebenen Räder 32, 34 beziehungsweise von diese antreibenden Wellen 54, 56 erfassen. Beruhend auf diesen beiden Sensorausgaben beziehungsweise beruhend auf der Ausgabe des Drehzahlsensors 48 kann die Fahrzeuggeschwindigkeit errechnet werden; d.h. diese Sensorausgaben der Sensoren 48, 50, 52 beinhalten Information über die Fahrzeuggeschwindigkeit.

Weiter ist ein Schaltsensor 58 vorgesehen, welcher eine Betätigung eines Schalthebels 60 erfasst und entsprechende Information I zur Ansteuervorrichtung 36 liefert. Beruhend auf dieser Information erkennt die Ansteuervorrichtung 36, welchen Schaltvorgang ein Fahrer durchführen will und erzeugt dann zum geeigneten Zeitpunkt und gegebenenfalls unter Berücksichtigung der weiteren den Fahrzustand repräsentierenden Information einen geeigneten Ansteuerbefehl für die Getriebeanordnung 26. Es sei darauf hingewiesen, dass an Stelle der Erfassung der Schalthebelbetätigung die Durchführung eines Schaltvorgangs auch nach Art eines Automatikgetriebes beruhend auf der Fahrsituation erfolgen kann.

Bei dem Antriebssystem 10 ist ferner ein Gas- oder Fahrpedal 62 mit einem zugeordneten Fahrpedalsensor 64 vorgesehen, dessen Ausgangssignal das Betätigungsausmaß des Fahrpedals repräsentiert. Weiter ist ein Bremspedal 66 vorgesehen, dem ebenfalls ein Sensor 68 zugeordnet ist. Das Ausgangssignal dieses Bremspedalsensors 68 repräsentiert das Betätigungsausmaß des Bremspedals 66.

Beruhend auf all diesen Sensoreingaben und möglicherweise noch weiteren Sensoreingaben, beispielsweise von einem Umgebungstemperatursensor, einem Kühlmitteltemperatursensor, einem Gierbewegungssensor und dergleichen, erzeugt die Ansteuervorrichtung 36 verschiedene Ansteuerbefehle oder Ansteuervorgaben, welche dann in den verschiedenen anzusteuernden Aggregaten oder Komponenten, also der Leistungsstellanordnung 38, der Stellgliedanordnung 40 und der Stellgliedanordnung 42 umgesetzt werden, d.h. zur Durchführung von Stellvorgängen im Antriebsaggregat 12, in der Kupplungsanordnung 20 beziehungsweise in der Getriebeanordnung 26 führen. Diese Ansteuervorgaben werden in der Ansteuervorrichtung 36 in einem Prozessor ermittelt, in welchem ein entsprechendes Steuerprogramm abläuft, das als Eingabe die verschiedenen Sensoreingaben I empfängt und das als Ausgabe eine Ansteuervorgabe erzeugt, die entweder als Ansteuerbefehl direkt zu den verschiedenen Stellbereichen 38, 40, 42 geleitet wird, oder die nachfolgend noch in der Ansteuervorrichtung 36 in einen jeweiligen Ansteuerbefehl umgesetzt und dann erst zu den Stellbereichen geleitet wird.

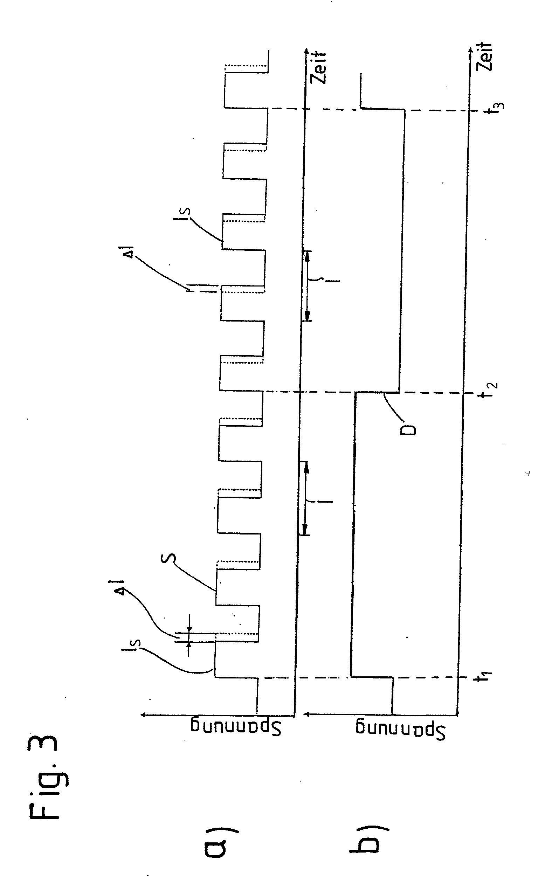

Die Fig. 2 zeigt detailliert den Aufbau der in Fig. 1 mit dem Bezugszeichen 40 bezeichneten Stellgliedanordnung der Kupplungsanordnung 20. Die Stellgliedanordnung 40 umfasst in diesem Beispiel eine Fluidpumpe 70, welche aus einem Fluidspeicher, beispielsweise Hydraulikspeicher 72, Fluid absaugt und in einen Druckspeicher 74 fördert. Über eine allgemein mit 76 bezeichnete Ventilanordnung, welche beispielsweise ein drehbares oder verschiebbares Ventilorgan in einem Ventilkörper aufweist, kann eine Zylinderkammer eines Nehmerzylinders, der beispielsweise im Bereich der Kupplungsanordnung 20 zur Einwirkung auf einen Kraftspeicher angeordnet ist, wahlweise in Verbindung mit dem Druckspeicher 74 gebracht werden, so dass durch Druckfluideinleitung in den Nehmerzylinder ein Kolben verschoben wird und auf den Kraftspeicher einwirkt. Es wird auf diese Art und Weise die Kupplungsanordnung 20 in Richtung Auskuppeln verstellt. Um die Kupplungsanordnung 20 in Richtung Einkuppeln zu verstellen, kann in geregelter Art und Weise die Ventilanordnung 76 eine Fluidverbindung zwischen dem Nehmerzylinder und dem im Wesentlichen drucklosen Fluidreservoir 72 herstellen. Ferner kann selbstverständlich die Ventilanordnung 76 durch entsprechende Positionierung ihres Ventilorgans den Nehmerzylinder auch vollständig abschließen, um die Kupplungsanordnung 20 in einer bestimmten Betätigungsstellung zu halten. Um bei einer derartigen Stellgliedanordnung 40, welche eine unter Ansteuerung der Ansteuervorrichtung 36 stehende und somit in ihrer Stellposition regelbare Ventilanordnung 76 enthält, dafür zu sorgen, dass ein Anhaften des bewegbaren Ventilorgans verhindert wird, wird die Ventilanordnung 76 von der Ansteuervorrichtung 36 sowie im Folgenden mit Bezug auf die Fig. 3 beschrieben angesteuert.

Im Allgemeinen wird der Ventilanordnung 76 ein impulsbreitenmoduliertes Grund-Ansteuersignal S zugeleitet, das in Fig. 3a als mit durchgezogener Linie dargestelltes Rechteckspannungssignal erkennbar ist. Dieses Signal weist eine vorgegebene Perioden- oder Intervalllänge I auf, wobei zur Veränderung der Stellung des Ventilorgans die Zeitdauer, während welcher die Spannung auf hohem Niveau ist, variiert wird. Je länger die Spannung in den verschiedenen Intervallen I auf einem hohen Wert gehalten wird, desto größer ist die in den verschiedenen Intervallen aufgebrachte elektrische Leistung und desto stärker wird beispielsweise ein Ventilschieber gegen die Wirkung einer Rückstellfeder verschoben. Die durch die Intervalllänge I vorgegebene Taktfrequenz des Grund-Ansteuersignals liegt im Bereich von einem KHz. Dies ist eine Frequenz, die ausreichend hoch ist, um zu verhindern, dass das bewegbare Ventilorgan in eine mitschwingende Bewegung gebracht wird. Dies hat zur Folge, dass dann, wenn an das Ventilorgan ein Ansteuersignal angelegt wird, das in Anpassung an eine vorzusehende Stellung der Ventilanordnung eine bestimmte Zeitdauer der Spannungsimpulse I_{S} aufweist, das bewegbare Ventilorgan sich an einer bestimmten Position positionieren und dort dann im Wesentlichen ruhig verharren wird. Dabei besteht jedoch die Gefahr, dass beim Übergang in den Haftreibungszustand insbesondere dann, wenn ohnehin reibungsmäßig schwierige Bedingungen vorliegen, zur nachfolgenden Veränderung der Lage des Ventilschiebers übermäßig viel elektrische Leistung aufgewandt werden muss, was Überschwinger und zeitliche Verzögerungen erzeugt.

Um diesem Problem entgegenzutreten, wird mit der Periode eines in Fig. 3b dargestellten Überlagerungssignals D die Breite der Spannungsimpulse I_{S} des Grund-Ansteuersignals verändert. Während beispielsweise zwischen den Zeitpunkten t₁ und t₂ das Signal D auf einem hohen Wert ist, wird den gemäßdervorzusehenden Ventilstellung vorgegebenen Spannungsimpulsen Iₛ eine zusätzliche Impulsdauer ΔI hinzugefügt. Auf Grund der gleichbleibenden Gesamt-Intervalldauer I hat dies zur Folge, dass zwischen den Zeitpunkten t₁ und t₂ tatsächlich eine etwas höhere elektrische Leistung aufgebracht wird, d.h. tatsächlich auch ein etwas höherer elektrischer Strom fließt. Dies bedeutet, dass das bewegbare Ventilorgan aus der an sich vorzusehenden Soll-Lage geringfügig herausbewegt wird. Ist das Signal D dann auf einem niederen Wert, was zwischen den Zeitpunkten t₂ und t₃ der Fall ist, wird von den Spannungsimpulsen Iₛ, welche, beispielsweise auf Grund der Tatsache, dass das Ventilorgan in konstanter Stellung zu halten ist, immer noch die gleiche Grund-Länge aufweisen, wie im Intervall zwischen den Zeitpunkten t₁ und t₂, diese Intervalllänge ΔI abgezogen. D.h., im Zeitintervall t₂ bis t₃ werden um die Größe ΔI verkürzte Spannungsimpulse ausgegeben, mit der Folge, dass während dieses Zeitraums tatsächlich weniger elektrische Leistung aufgebracht wird, als dies zum Halten des Ventilorgans in der vorgegebenen Stellung eigentlich erforderlich wäre.

Durch die Variation der Impulsdauer der Spannungsimpulse I_{S} des Ansteuersignals S für die Ventilanordnung 76 wird dem Ventilorgan eine Oszillationsbewegung mit der Periode bzw. Frequenz des Signals D aufgeprägt. Dieses Aufprägen der Oszillationsbewegung ist unabhängig davon, in welchem Grund-Bewegungszustand das Ventilorgan 76 sich befindet. Ist dieses in einem Ruhezustand, wie anhand des Beispiels der Fig. 3a beschrieben, so wird die Oszillationsbewegung um eine vorgegebene Nulllage herum stattfinden. Wird das Ventilorgan verstellt, so wird der Verstellbewegung, welche dann den Grund-Bewegungszustand vorgibt, diese Oszillationsbewegung überlagert, mit der Folge, dass eine mit der entsprechenden Periode sich verändernde Verstellgeschwindigkeit vorliegt.

Durch das Aufprägen dieser Oszillations- oder Zitterbewegung wird verhindert, dass das Ventilorgan der Ventilanordnung 76 in einen am Ventilkörper anhaftenden Zustand gelangt und somit nur schwer aus diesem Zustand herauszubewegen ist.

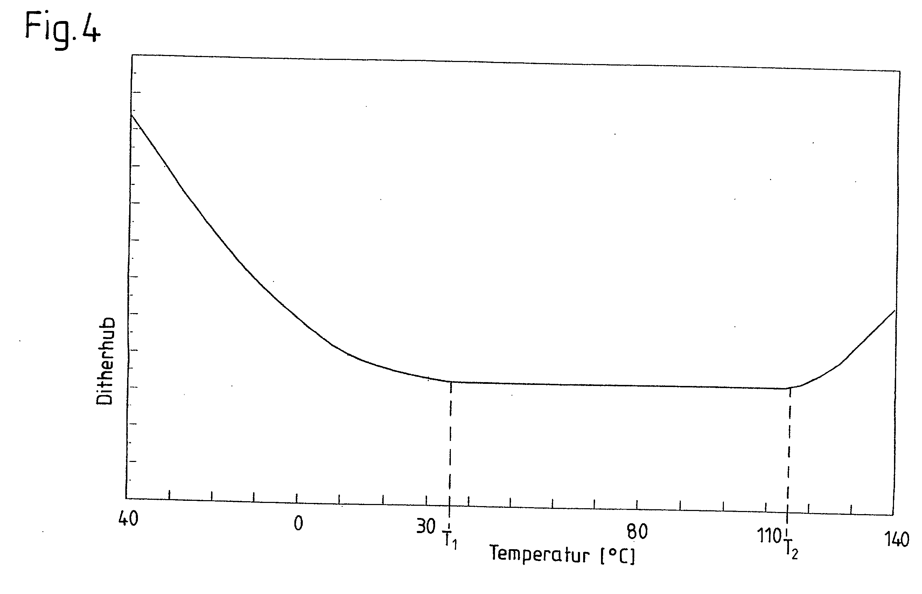

Es ist nun erkannt worden, dass die Stärke des Anhaftens sich in Abhängigkeit von Betriebszuständen ändern kann. Ein wesentlicher diese Tendenz zum Anhaften beeinflussender Parameter ist die Temperatur im Bereich der Ventilanordnung 76. Je niedriger die Temperatur wird, desto schwieriger wird es, beispielsweise auf Grund einer zäher werdenden Schmierung, das Ventilorgan zu bewegen. Um dem entgegenzutreten, sieht die vorliegende Erfindung vor, dass die Größe bzw. die Amplitude der angesprochenen Oszillationsbewegung oder Zitterbewegung betriebszustandsabhängig variiert wird. Dies erkennt man am Diagramm der Fig. 4. In einem Temperaturbereich zwischen den beiden Temperaturen T₁ und T₂, die etwa bei 35°C und 115°C liegen, wird die Größe der Oszillationsbewegung, im Allgemeinen auch Ditherhub genannt, näherungsweise gleich gehalten, da, insofern als die Temperatur betroffen ist, hier keine wesentlichen Änderungen in der Betriebscharakteristik auftreten. Wird jedoch die Temperatur T₁ unterschritten, so wird durch Verlängern der Intervalle ΔI, um welche die Spannungsimpulse I_{S} des impulsbreitenmodulierten Spannungssignals S verändert werden, die Auslenkung des Ventilorgans vergößert. Die Folge dieser Vergrößerung der Intervalle ΔI ist, dass ein entsprechend größerer Unterschied der jeweils in den Hoch-Intervallen des Signals D und in den Nieder-Intervallen des Signals D erzeugten elektrischen Leistungen wird. Daraus folgt eine enstprechend größere Auslenkung bzw. Oszillation des bewegbaren Ventilorgans. Auch zu höheren Temperaturen wird bei Überschreiten der Temperatur T₂ durch entsprechende Veränderung der Ansteuerung dafür gesorgt, dass der Oszillationshub bzw. die Auslenkungsamplitude dieser Oszillationsbewegung zunimmt. Hier führen möglicherweise Risse im Schmierfilm bzw. thermische Ausdehnungseffekte zu einer Erschwerung der Bewegung bzw. zur verstärkten Tendenz des Anhaftens.

Durch die vorliegende Erfindung wird also dafür gesorgt, dass betriebszustandsabhängig die Oszillationsbewegung des bewegbaren Ventilorgans, welche dem Anhaften entgegenwirkt, angepasst wird. Es ist somit nur in hinsichtlich der Tendenz zum Anhaften kritischen Betriebszustandsbereichen erforderlich, eine vergleichsweise große Oszillationsbewegung einzuführen, welche sich mit zunehmender Amplitude auch am Gesamtsystem durch Vibrationen oder Geräusche spürbar machen kann. In weniger kritischen Betriebszuständen kann das Ausmaß der Oszillationsbewegung deutlich verringert werden, was auch eine Erhöhung des Betriebskomforts zur Folge hat.

Es sei darauf hingewiesen, dass selbstverständlich die in Fig. 4 dargestellte Kennlinie nur beispielhaft ist und für verschiedenste Typen von Ventilanordnungen in anderer Art und Weise ausfallen kann. Auch können andere Betriebsparameter, die beispielsweise auch die Art und Weise der Betätigung der Kupplungsanordnung 20 umfassen können, zur Veränderung des Ausmaßes der Oszillationsbewegung herangezogen werden. Hier können mehrdimensionale Kennfelder generiert werden, um eine Korrektur der Oszillationsbewegung beruhend auf einer Vielzahl von Parametern vorzunehmen. All diese Korrekturen können jedoch bei im Wesentlichen konstanter Taktfrequenz des impulsbreitenmodulierten Spannungssignals S und bei im Wesentlichen konstanter Frequenz des die Variation vorgebenden Signals D stattfinden. Diese beiden Frequenzen können dann in optimaler Weise aufeinander abgestimmt werden, um ungewünschte Wechselwirkungen, wie z.B. Schwebungen dieser beiden Oszillationen, zu vermeiden.

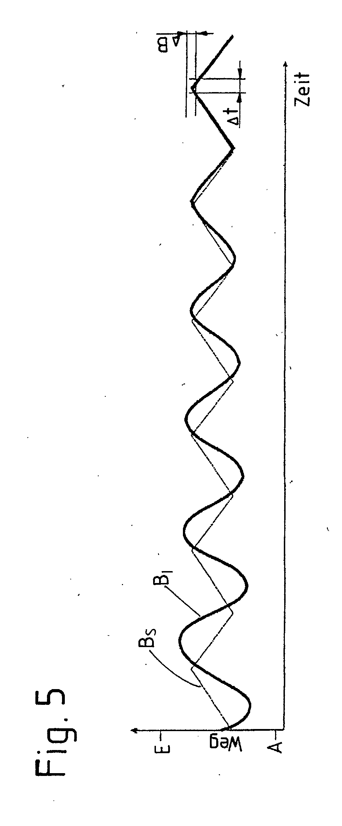

Ein weiterer vorteilhafter Aspekt der vorliegenden Erfindung wird im Folgenden mit Bezug auf die Fig. 5 beschrieben. Beim Aufbau von Antriebssystemen, wie sie in Fig. 1 dargestellt sind, ist grundsätzlich davon auszugehen, dass auf Grund der Tatsache, dass eine Vielzahl an Bauteilen involviert ist, Fertigungstoleranzen zu spürbar unterschiedlichen Betriebscharakteristiken führen. Haben beispielsweise bei verschiedenen Ventilanordnungen verschiedene Ventilorgane verschiedene Passungen im zugeordneten Ventilkörper, so kann dies zu völlig verschiedenen Bewegungscharakteristiken und völlig verschiedenen Tendenzen zum Anhaften am Ventilkörper führen. Diesem Problem wird gemäß dem weiteren Aspekt der vorliegenden Erfindung wie folgt entgegengetreten:

Wenn beispielsweise eine derartige Ventilanordnung neu aufgebaut worden ist und in einen Antriebsstrang oder eine Kupplung integriert worden ist, dann wird beispielsweise vor der Auslieferung eines Fahrzeugs an einen Kunden in einem Optimierungslauf von der Ansteuervorrichtung 36 für die Kupplungsanordnung 20 ein Soll-Bewegungsablauf B_{S} vorgegeben, wie er in Fig. 5 erkennbar ist. Dies ist eine Verstellbewegung der Kupplungsanordnung 20 mit näherungsweise dreieckartiger oder rampenartiger Form, wobei im Verlaufe dieser Verstellbewegung bzw. dieses Soll-Bewegungsablaufs die Kupplung weder in ihre vollkommen eingerückte Stellung E noch in ihre vollkommen ausgerückte Stellung A gelangt. Es wird also eine zickzackartig oszillierende Soll-Bewegung für die Kupplung vorgegeben. Durch entsprechende Ansteuerung der Ventilanordnung 76 wird durch intermittierende Fluidzufuhr und Fluidabfuhr dann versucht, den Ist-Bewegungsablauf B_{I} an den Soll-Bewegungsablauf B_{S} anzupassen. Zu Beginn wird dabei mit einer Grund-Größe der vorangehend angesprochenen Oszillation gearbeitet, die vergleichsweise klein ist. D.h., die Größe der Intervalle ΔI ist sehr klein, kann beispielsweise bei Null sein. Da in diesem Zustand also dem Anhaften relativ wenig entgegengewirkt wird, werden im Diagramm der Fig. 5 nunmehr zum einen die Überschwinger des zu verstellenden Organs, nämlich der Kupplungsanordnung erkennbar, und werden zum anderen die zeitlichen Verzögerungen erkennbar, mit welchen die Maxima und Minima der Ist-Bewegung den entsprechenden Maxima und Minima der Soll-Bewegung nachhinken. Es wird dann sukzessive die Größe der Oszillationsbewegung erhöht, d.h. die Intervalle ΔI werden beispielsweise schrittweise vergrößert. Die Folge dieser schrittweisen Vergrößerung ist, dass durch die zunehmende Oszillationsbewegung oder Zitterbewegung die Tendenz zum Anhaften verringert wird und somit der Ist-Bewegungsablauf B_{I} zunehmend besser dem Soll-Bewegungsablauf B_{S} angepasst wird. Diese beiden Bewegungsabläufe werden miteinander verglichen und es wird überwacht, in welchem Ausmaß der Ist-Bewegungsablauf B_{I} vom Soll-Bewegungsablauf B_{S} abweicht. Diese Abweichung kann beispielsweise dadurch ermittelt werden, dass zu Zeitpunkten, zu welchen der Soll-Bewegungsablauf ein Extremum, beispielsweise ein Maximum, aufweist, überprüft wird, ob der zu diesem Zeitpunkt vorliegende Wert des Ist-Bewegungsablaufes, also die momentan vorliegende Ist-Lage, innerhalb eines bestimmten Abweichungsintervalls ΔB um den entsprechenden Wert bzw. die entsprechende Lage des Soll-Bewegungsablaufs B_{S} ist. Ist dies der Fall, so wird entschieden, dass die Abweichung nunmehr ausreichend gering ist und eine weitere Veränderung der Intervalle ΔI nicht eforderlich ist. Alternativ oder zusätzlich kann zur Bestimmung, ob die Abweichung ein akzeptierbares Ausmaß angenommen hat, überprüft werden, wie groß die Differenz der Zeitpunkte ist, zu welchen der Soll-Bewegungsablauf B_{S} und der Ist-Bewegungsablauf B_{I} jeweilige Extrema aufweisen. D.h., hier kann um ein Extremum des Soll-Bewegungablaufs B_{S} ein Zeitfenster Δt definiert werden und überprüft werden, ob in diesem Zeitfenster Δt um den Zeitpunkt, zu welchem der Soll-Bewegungsablauf B_{S} ein Extremum aufweist, auch ein Extremum des Ist-Bewegungsablaufs B_{I} auftritt. Ist dies der Fall, kann wieder entschieden werden, dass die Abweichung hinreichend gering ist und die Größe der Oszillationsbewegung für einen konkreten Antriebsstrang bzw. der konkrete Ventilanordnung 76 optimiert worden ist. Da diese Optimierung bei einer bestimmten vorgegebenen Temperatur stattfindet, kann dann im nachfolgenden tatsächlichen Betrieb eines derartigen Systems die vorangehend angesprochene betriebszustandsabhängige, beispielsweise temperaturabhängige, Korrektur der Varition der Spannungsimpulse des impulsbreitenmodulierten Signals S vorgenommen werden.

## Patentansprüche

1. Verfahren zum Ansteuern einer regelbaren Ventilanordnung (76), insbesondere einer zur Kupplungsbetätigung eingesetzten Ventilanordnung (76), wobei die Ventilanordnung (76) ein zur Veränderung des Stellzustandes der Ventilanordnung (76) bewegbares Ventilorgan aufweist, bei welchem Verfahren die Ventilanordnung (76) derart angesteuert wird, dass einem Grund-Bewegungszustand des Ventilorgans eine Oszillationsbewegung (D) überlagert wird, wobei die Größe (ΔI) der Oszillationsbewegung in Abhängigkeit von wenigstens einem Betriebsparameter eingestellt wird.

2. Verfahren nach Anspruch 1,
**dadurch gekennzeichnet, dass** der wenigstens eine Betriebsparameter die Temperatur im Bereich der Ventilanordnung (76) umfasst.

3. Verfahren nach Anspruch 2,
**dadurch gekennzeichnet, dass** mit abnehmender Temperatur ausgehend von einer ersten Referenztemperatur (T₁) die Größe (ΔI) der Oszillationsbewegung (D) vergrößert wird.

4. Verfahren nach Anspruch 2 oder 3,
**dadurch gekennzeichnet, dass** mit zunehmender Temperatur ausgehend von einer zweiten Referenztemperatur (T₂) die Größe (ΔI) der Oszillationsbewegung (D) vergrößert wird.

5. Verfahren nach Anspruch 3 und Anspruch 4,
**dadurch gekennzeichnet, dass** die erste Referenztemperatur (T₁) kleiner ist als die zweite Referenztemperatur (T₂).

6. Verfahren nach Anspruch 5,
**dadurch gekennzeichnet, dass** zwischen der ersten Referenztemperatur (T₁) und der zweiten Referenztemperatur (T₂) die Größe (ΔI) der Oszillationsbewegung (D) im Wesentlichen keine temperaturbedingte Änderung erfährt.

7. Verfahren nach einem der Ansprüche 1 bis 6,
**dadurch gekennzeichnet, dass** der Ventilanordnung (76) ein impulsbreitenmoduliertes Ansteuersignal (S) zugeführt wird, wobei eine Grund-Impulsbreite (I_{S}) beruhend auf der vorzusehenden Ventilstellung eingestellt wird, und dass zum Erhalt der Oszillationsbewegung (D) die Grund-Impulsbreite (I_{S}) vorzugsweise periodisch variiert wird.

8. Verfahren nach Anspruch 7,
**dadurch gekennzeichnet, dass** die Größe (ΔI) der Variation der Grund-Impulsbreite (I_{S}) in Abhängigkeit von dem wenigstens einen Betriebsparameter eingestellt wird.

9. Verfahren zur Ansteuerungsoptimierung bei einer regelbaren Ventilanordnung (76), insbesondere bei einer zur Kupplungsbetätigung eingesetzten Ventilanordnung (76), wobei im Betrieb durch Ansteuern der Ventilanordnung (76) ein zu verstellendes Organ verstellbar oder/und in einer vorgegebenen Stellung haltbar ist und die Ventilanordnung (76) derart angesteuert wird, dass einem Grund-Bewegungszustand eines zur Veränderung des Stellzustandes der Ventilanordnung (76) bewegbaren Ventilorgans eine Oszillationsbewegung überlagert ist, wobei das Verfahren die Schritte umfasst:
a) bei vorgegebener Grund-Größe der Oszillationsbewegung (D) beziehungsweise einer diese bestimmenden Ansteuergröße (ΔI), Vorgeben einer im Wesentlichen periodischen Soll-Bewegung (B_{S}) für das zur verstellende Organ (20),
b) Vergleichen der vorgegebenen Soll-Bewegung (B_{S}) mit einer erfassten Ist-Bewegung (B_{I}) des zu verstellenden Organes (20),
c) dann, wenn zwischen der Soll-Bewegung (B_{S}) und der Ist-Bewegung (B_{I}) eine ein vorbestimmtes Ausmaß übersteigende Abweichung erfasst wird, Erhöhen der Größe (ΔI) der Oszillationsbewegung (D) beziehungsweise der diese bestimmenden Ansteuergröße.

10. Verfahren nach Anspruch 9,
**dadurch gekennzeichnet, dass** die Größe (ΔI) der Oszillationsbewegung (D) beziehungsweise der diese bestimmenden Ansteuergröße schrittweise erhöht wird, bis die Abweichung unter dem vorbestimmten Ausmaß liegt.

11. Verfahren nach Anspruch 9 oder 10,
**dadurch gekennzeichnet, dass** die Abweichung zwischen der Soll-Bewegung (B_{S}) und der Ist-Bewegung (B_{I}) bestimmt wird durch:
- Ermitteln einer Ist-Lage des zu verstellenden Organs dann, wenn eine Soll-Lage ein Lageextremum aufweist, und Bilden einer Differenz zwischen der ermittelten Ist-Lage und der Soll-Lage oder/und
- Ermitteln einer Zeitdifferenz zwischen einem ersten Zeitpunkt, zu welchem die Soll-Lage ein Lageextremum aufweist, und einem zweiten Zeitpunkt, zu welchem die Ist-Lage nach dem ersten Zeitpunkt ein Lageextremum aufweist.

12. Verfahren nach einem der Ansprüche 9 bis 11,
**dadurch gekennzeichnet, dass** der Ventilanordnung (76) ein impulsbreitenmoduliertes Ansteuersignal (S) zugeführt wird, wobei eine Grund-Impulsbreite (I_{S}) beruhend auf der vorzusehenden Ventilstellung eingestellt wird, dass zum Erhalt der Oszillationsbewegung (D) die Grund-Impulsbreite (I_{S}) vorzugsweise periodisch variiert wird und dass im Schritt c) zum Erhöhen der Größe (ΔI) der Oszillationsbewegung (D) die Variation der Grund-Impulsbreite (I_{S}) erhöht wird.

13. Verfahren nach einem der vorhergehenden Ansprüche,
**dadurch gekennzeichnet, dass** der Ventilanordnung (76) ein impulsbreitenmoduliertes Ansteuersignal (S) mit vorbestimmter Taktfrequenz zugeführt wird und dass zum Erhalt der Oszillationsbewegung (D) eine Grund-Impulsbreite (I_{S}) des impulsbreitenmodulierten Ansteuersignals (S) mit einer Frequenz variiert wird, welche kleiner ist als die Taktfrequenz des Ansteuersignals (S).
